# EUROPÄISCHE PATENTSCHRIFT

(11) **EP 3 818 575 B1**
(45) Veröffentlichungstag und Bekanntmachung des Hinweises auf die Patenterteilung: **01.12.2021**
(21) Anmeldenummer: 19731994.0
(22) Anmeldetag: 18.06.2019
(51) Int. Cl.: B60L 50/64, B25J 9/16, B60K 1/04, H01M 50/20

(54) **VERFAHREN ZUR HERSTELLUNG EINER FAHRZEUG-TRAKTIONSBATTERIE**
METHOD FOR PRODUCING A VEHICLE TRACTION BATTERY
PROCÉDÉ DE FABRICATION D'UNE BATTERIE DE TRACTION DE VÉHICULE

(30) Priorität: 02.07.2018 DE 102018210819
(43) Veröffentlichungstag der Anmeldung: 12.05.2021
(73) Patentinhaber: Audi AG, 85045 Ingolstadt (DE)
(72) Erfinder: SCHÖNBERGER, Florian, 85051 Ingolstadt (DE); LANGE, Thomas, 85051 Ingolstadt (DE); VOLLNHALS, Ralf, 85049 Ingolstadt (DE)
(86) Internationale Anmeldenummer: PCT/EP2019/066042
(87) Internationale Veröffentlichungsnummer: WO 2020/007603

(56) Entgegenhaltungen:
- WO-A1-2015/045981
- CN-B- 105 253 117
- DE-A1-102014 012 475
- FR-A1- 2 988 040
- JP-A- S59 108 283

## Beschreibung

Die Erfindung betrifft ein Verfahren zum Fügen zumindest eines Batteriemoduls in ein Batteriegehäuse einer Traktionsbatterie eines Fahrzeugs nach dem Oberbegriff des Anspruchs 1 wie eine Roboteranlage zur Durchführung des Verfahrens nach dem Anspruch 8.

Die Traktionsbatterie eines elektrisch betriebenen Fahrzeugs weist Batteriezellen auf, die jeweils als Zellenverbund in quaderförmigen Batteriemodulen zusammengefasst sind. Eine Anzahl solcher Batteriemodule kann in einem Batteriegehäuse angeordnet sein, das im Fahrzeug positionierbar ist. Die im Batteriegehäuse angeordneten Batteriemodule können mit einem Kühlsystem gekühlt werden, um eine bessere Betriebsfähigkeit zu erzielen. Das Kühlsystem kann beispielhaft ein fahrzeugseitiger Kühlmittelkreislauf sein, in dem Kühlmittelkanäle im Gehäuseboden des Batteriegehäuses eingebunden sind. Im Hinblick auf eine gute Wärmeleitfähigkeit zwischen dem jeweiligen Batteriemodul und dem Gehäuseboden können wärmeisolierende Luftspalte zwischen dem Batteriemodul und dem Gehäuseboden mit einer Wärmeleitpaste gefüllt sein.

Eine gattungsgemäße Prozessabfolge zur Herstellung einer solchen Traktionsbatterie wird automatisiert in einer Roboteranlage durchgeführt. Hierzu wird ein noch nicht mit dem Batteriemodul bestücktes Batteriegehäuse in eine Fügestation der Roboteranlage transferiert. In der Fügestation erfolgt zunächst ein Applikations-Prozessschritt, bei dem die Wärmeleitpaste auf den Gehäuseboden des Batteriegehäuses aufgebracht wird. Anschließend erfolgt ein Zustell-Prozessschritt, bei dem eine Zustelleinrichtung das jeweilige Batteriemodul über einen Zustellweg und mittels einer Zustellkraft in das Batteriegehäuse einfährt, und zwar bis Erreichen einer Montageposition, in der das Batteriemodul lagerichtig auf einer Anlagekontur des Gehäusebodens des Batteriegehäuses aufliegt. Das Batteriemodul kann unmittelbar auf der Anlagekontur des Gehäusebodens aufliegen. Alternativ und/oder zusätzlich kann das Batteriemodul auch mittelbar unter Zwischenlage einer Wärmeleitpasten-Schicht auf der Anlagekontur des Gehäusebodens aufliegen. Dem Zustell-Prozessschritt ist ein Befestigungs-Prozessschritt nachgelagert, bei dem das Batteriemodul über Schraubbolzen mit dem Gehäuseboden des Batteriegehäuses verspannt wird.

Im Stand der Technik wird der Schraubvorgang während des Befestigungs-Prozessschrittes mittels einer Überwachungseinrichtung überwacht, beim Schraubvorgang ein auf den Schraubbolzen wirkendes Ist-Anzugmoment erfasst. Bei Erreichen eines Soll-Anzugmomentes wird der automatisiert durchgeführte Schraubvorgang beendet.

Im Zustell-Prozessschritt können sich Störkonturen im noch nicht mit dem Batteriemodul bestückten Batteriegehäuse befinden. Dadurch wird ein lagerichtiges Positionieren des Batteriemoduls im Batteriegehäuse beeinträchtigt. Eine solche Störkontur ist beispielhaft eine fehlerhaft im Batteriegehäuse angeordnete Fügekomponente, etwa ein Schraubbolzen, oder dergleichen. Dies kann zu einer fehlerhaften Ablageposition des Batteriemoduls im Batteriegehäuse führen, wodurch die Betriebsfähigkeit des Batteriemoduls beeinträchtigt sein kann.

Aus der DE 10 2014 203 765 A1 ist ein Verfahren zur Herstellung einer Baugruppe aus einem Energiespeichermodul und einem Kühlelement bekannt. Aus der DE 21 56 012 A1 ist ein Verfahren sowie eine Vorrichtung zum Anziehen von Schrauben bekannt. Aus der DE 29 18 845 A1 ist ein Verfahren zum Anschrauben eines Halbleiter-Bauteils an einem Kühlblech bekannt.

Die Aufgabe der Erfindung besteht darin, ein Verfahren sowie eine Roboteranlage zur Herstellung einer Traktionsbatterie eines Fahrzeugs bereitzustellen, bei der in einfacher sowie betriebssicherer Weise ein einwandfreier Zusammenbau der Traktionsbatterie gewährleistet ist.

Die Aufgabe ist durch die Merkmale des Anspruches 1 oder 8 gelöst. Bevorzugte Weiterbildungen der Erfindung sind in den Unteransprüchen offenbart.

Gemäß dem kennzeichnenden Teil des Anspruches 1 wird der Zustell-Prozessschritt mittels einer Überwachungseinrichtung überwacht. Der Überwachungseinheit ist ein Wegmesssystem zugeordnet, das während des Zustellvorgangs den Ist-Zustellweg erfasst. Zudem ist der Überwachungseinheit ein Kraftmesssystem zugeordnet, das während des Zustellvorgangs eine Ist-Zustellkraft erfasst. Auf der Grundlage des erfassten Ist-Zustellwegs und der erfassten Ist-Zustellkraft wertet die Überwachungseinheit aus, ob der Zustell-Prozessschritt fehlerfrei erfolgt oder nicht. Bei Vorliegen eines fehlerbehafteten Zustell-Prozessschrittes kann die Traktionsbatterie zu einer Nachbearbeitungs-Station transferiert werden, in der beispielhaft der Zustell-Prozessschritt nicht mehr automatisiert, sondern vielmehr manuell durch einen Werker wiederholt wird.

In einer technischen Umsetzung kann die Überwachungseinrichtung eine Auswerteeinheit aufweisen, die die Ist-Zustellkraft und den Ist-Zustellweg mit damit korrespondierenden Sollwerten vergleicht, die in der Auswerteeinheit zum Beispiel in einer Datenbank tabellarisch hinterlegt sein können. Die Auswerteeinheit kann auf der Grundlage eines Soll-/Istwert-Vergleiches ermitteln, ob ein fehlerfreier Zustell-Prozessschritt vorliegt.

In einer Ausführungsvariante kann die Überwachungseinrichtung einen Ist-Kraft-/Wegverlauf der Ist-Zustellkraft über den Ist-Zustellweg erfassen. Der Ist-Kraft-/Wegverlauf kann mit einem in der Überwachungseinrichtung hinterlegten Soll-Kraft-/Wegverlauf verglichen werden und auf der Grundlage dieses Vergleichs der Zustell-Prozessschritt bewertet werden.

Sofern die Überwachungseinrichtung einen einwandfreien Zustell-Prozessschritt ermittelt hat, kann ein prozesstechnisch nachgelagerter Befestigungs-Prozessschritt erfolgen, bei dem beispielhaft das zugestellte Batteriemodul mit dem Gehäuseboden des Batteriegehäuses verspannbar ist. Hierzu wird das Batteriemodul mittels zumindest eines Schraubbolzens an einem Anschraubpunkt des Batteriegehäuses verschraubt. Um eine einwandfreie Befestigung des Batteriemoduls zu gewährleisten, wird der obige Befestigungs-Prozessschritt bevorzugt mittels einer weiteren, zweiten Überwachungseinrichtung überwacht, die auswertet, ob der Befestigungsschritt fehlerfrei erfolgt oder nicht. Bevorzugt kann die zweite Überwachungseinrichtung während des Schraubvorgangs ein auf den Schraubbolzen wirkendes Ist-Anzugmoment erfassen. Das Ist-Anzugmoment kann in der Überwachungseinrichtung mit einem Soll-Anzugmoment verglichen werden. Sofern das Ist-Anzugmoment das Soll-Anzugmoment erreicht, wird der Schraubvorgang beendet.

Im Gehäuseboden des Batteriegehäuses können Kühlmittelkanäle oder andere Kühlelemente ausgebildet sein, die Bestandteil eines fahrzeugseitigen Kühlsystems sein können. Um die Wärmeleitfähigkeit zwischen dem eingebauten Batteriemodul und dem Gehäuseboden zu erhöhen, können wärmeisolierende Luftspalte zwischen dem Batteriemodul und dem Gehäuseboden mit einer Wärmeleitpaste aufgefüllt sein. Die Wärmeleitpaste kann in einem zeitlich vor dem Zustell-Prozessschritt erfolgenden Applikations-Prozessschritt aufgebracht werden.

Die Wegkoordinaten der Montageposition können in der Zustelleinrichtung hinterlegt sein. In gleicher Weise kann auch die bei Erreichen der Montageposition auf das Batteriemodul einwirkende Soll-Zustellkraft in der Überwachungseinrichtung hinterlegt sein.

Nachfolgend ist ein Ausführungsbeispiel der Erfindung anhand der beigefügten Figuren beschrieben. Es zeigen:
- Fig. 1: In einem Zusammenbauzustand ein in einem Batteriegehäuse verspanntes Batteriemodul;
- Fig. 2 bis 6: jeweils Ansichten, die eine Prozessabfolge zur Herstellung des in der Fig. 1 gezeigten Zusammenbauzustands der Traktionsbatterie veranschaulichen.

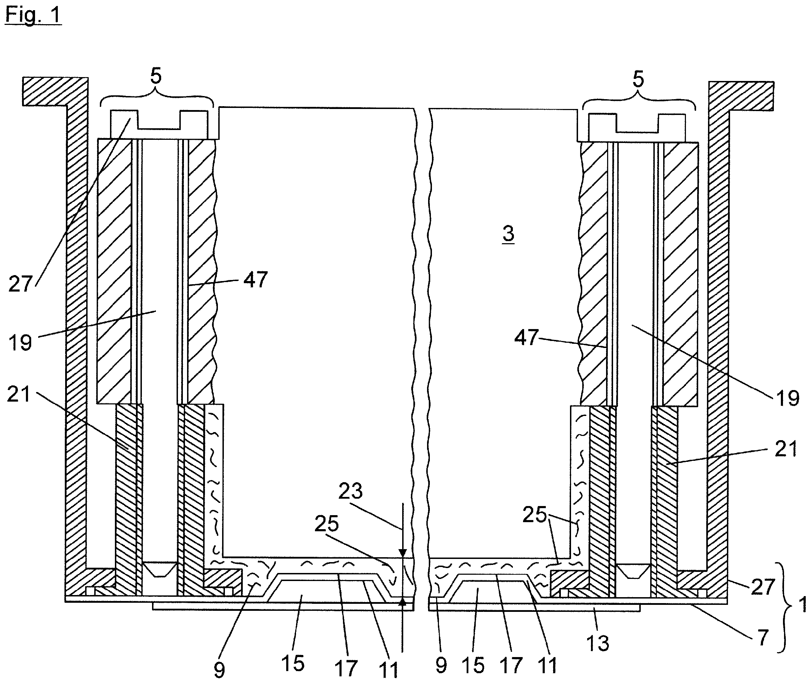

In der Fig. 1 ist grob vereinfacht in einer Seitenschnittdarstellung eine Traktionsbatterie eines elektrisch betriebenen Fahrzeugs angedeutet. Die Traktionsbatterie weist ein wannenförmiges oder kastenförmiges Batteriegehäuse 1 auf, in dem ein quaderförmiges Batteriemodul 3 positioniert ist, das aus nicht dargestellten einzelnen Batteriezellen aufgebaut ist. Das Batteriemodul 3 ist mittels Spanneinheiten 5 auf einem Gehäuseboden 7 des Batteriegehäuses 1 montiert. Wie aus der Fig. 1 weiter hervorgeht, weist der Gehäuseboden 7 eine Gehäuseboden-Basis 9 sowie davon in Richtung GehäuseInnenraum um eine Prägehöhe hochgezogene Kühlverprägungen 11 auf. Die Kühlverprägungen 11 begrenzen zusammen mit einem unteren Deckblechteil 13 Kühlmittelkanäle 15, die Bestandteile eines externen Fahrzeug-Kühlsystems sind. Die Oberseiten der Kühlverprägungen 11 bilden in der Fig. 1 eine Anlagekontur 17, auf der das Batteriemodul 3 unter Zwischenlage einer Wärmeleitpaste-Isolierschicht aufliegt.

Es ist hervorzuheben, dass der Aufbau des Gehäuseboden 7 in den Figuren lediglich beispielhaft ist und die Erfindung keinesfalls auf den in den Figuren gezeigten Aufbau des Gehäusebodens 7 beschränkt ist. Vielmehr kann alternativ zu den Figuren der Gehäuseboden 7 innenseitig ebenflächig ausgebildet sein und können die Kühlkanäle 15 unterhalb des ebenflächigen Gehäusebodens angeordnet sein.

Wie oben erwähnt, ist das Batteriemodul 3 über die Spanneinheiten 5 fest auf dem Gehäuseboden 7 verspannt. Jede der Spanneinheiten 5 besteht in der Fig. 1 aus einem Schraubbolzen 19, der durch einen Montageabschnitt 47 des Batteriemoduls 3 geführt ist und in einem am Gehäuseboden 7 befestigten Schraubdom 21 verschraubt ist. In der Fig. 1 sind die seitlich an den Kühlverprägungen 11 angrenzenden Luftspalte 23 mittels einer Wärmeleitpaste 25 vollständig aufgefüllt, um die Wärmeleitfähigkeit zwischen dem Batteriemodul 3 und dem kühlmitteldurchströmten Gehäuseboden 7 zu erhöhen.

Das Batteriegehäuse 1 weist außerdem vom Gehäuseboden 7 seitlich nach oben hochgezogene Gehäuse-Seitenwände 27 auf. Auf deren oberen Befestigungsflansch ist ein nicht gezeigter Batteriedeckel befestigbar.

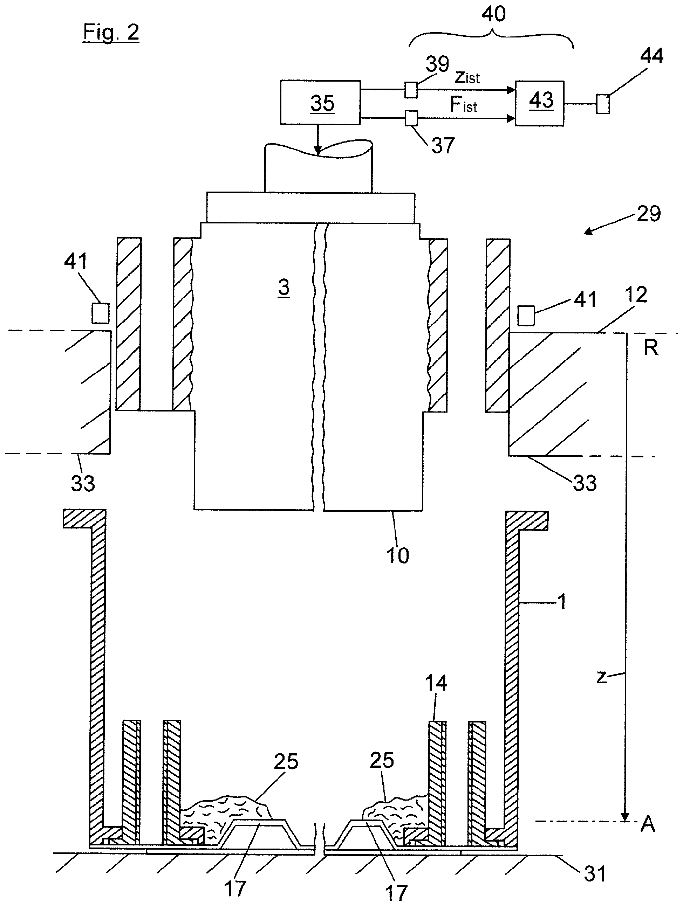

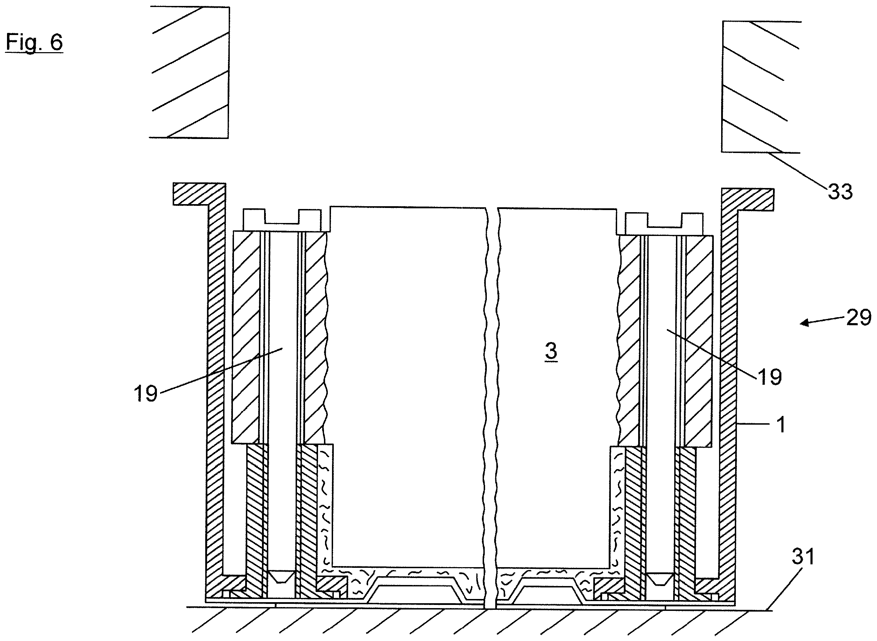

Anhand der Fig. 2 bis 6 wird eine Prozessabfolge zur Herstellung des in der Fig. 1 gezeigten Zusammenbauzustandes erläutert. Die Prozessabfolge wird in einer Roboteranlage durchgeführt, von der in den Figuren lediglich eine Fügestation 29 gezeigt ist. Die Fügestation 29 ist in den Figuren lediglich grob vereinfacht insoweit dargestellt ist, als es zum Verständnis der Erfindung erforderlich ist. Demzufolge ist in der Figur 2 das noch nicht mit dem Batteriemodul 3 bestückte Batteriegehäuse 1 in die Fügestation 29 (Fig. 2) transferiert. Die Fügestation 29 weist eine Ablagefläche 31 auf, auf der das Batteriegehäuse 1 positioniert ist. Zudem weist die Fügestation 29 einen ortsfesten Zentrierrahmen 33 auf, der eine einwandfreie zentrierte Zustellung des Batteriemoduls 3 von oben in das Batteriegehäuse 1 gewährleistet. Die Zustellung erfolgt in der Fig. 2 mittels einer nur schematisch angedeuteten, robotergesteuerten Zustelleinrichtung 35, mittels der das Batteriemodul 3 über einen Zustellweg z und mittels einer Zustellkraft F in das Batteriegehäuse 3 einfahrbar ist.

Der Zustelleinrichtung 35 sind ein Kraftmesssystem 37 und ein Wegmesssystem 39 zugeordnet. Das Kraftmesssystem 37 kann eine Kraftmessdose ein, mittels der während des Zustellvorgangs eine Ist-Zustellkraft Fist erfasst wird.

Mit Hilfe des Wegmesssystems 39 wird ein Ist-Zustellweg zᵢₛₜ während des Zustellvorgangs erfasst. Um eine flächenparallele Zustellung zu gewährleisten, ist es bevorzugt, wenn das Wegmesssystem 39 mehrere, insgesamt zumindest drei umfangsseitig voneinander beabstandete Wegsensoren 41 aufweist, von denen in der Figur 2 beispielhaft zwei Wegsensoren 41 angedeutet sind. Sowohl das Kraftmesssystem 37 als auch das Wegmesssystem 39 sind in Signalverbindung mit einer Auswerteeinheit 43 der Überwachungseinrichtung 40.

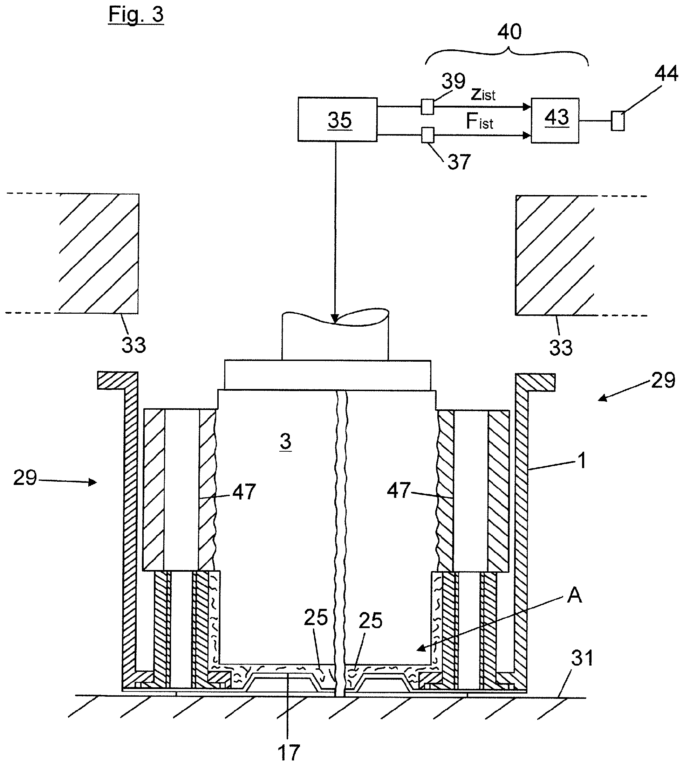

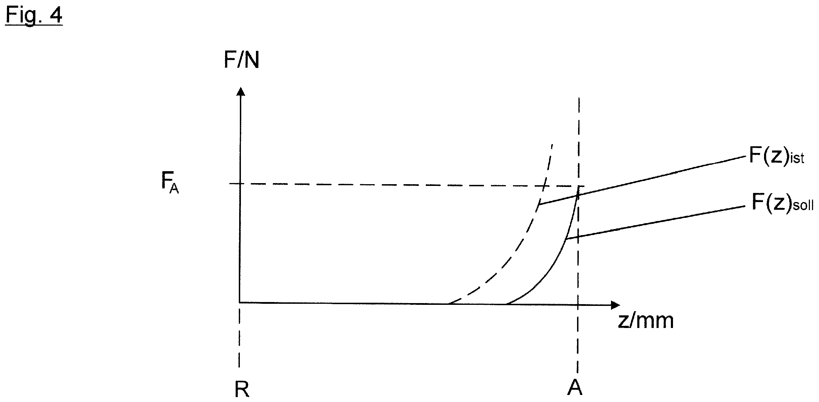

Zu Beginn der Prozessabfolge wird ein Applikations-Prozessschritt durchgeführt, bei dem die Wärmeleitpaste 25 grob verteilt aufgebracht wird. Anschließend erfolgt der Zustell-Prozessschritt, bei dem die Zustelleinrichtung 35 das Batteriemodul 3 bis zum Erreichen der Montageposition A (Fig. 3) in das Batteriegehäuse 1 einfährt. In der Auswerteeinheit 43 wird ein Zustellkraft-Verlauf über den Zustellweg z erfasst, der gemäß der Fig. 2 oder 4 zwischen einem Start-Referenzpunkt R und der endgültigen Montageposition A in der Hochrichtung z definiert ist. Der Ist-Kraft-/Wegverlauf F(z)ᵢₛₜ wird mit einem Soll-Kraft-/Wegverlauf F(z)ₛₒₗₗ in der Auswerteeinheit 43 verglichen, wie es in der Fig. 4 angedeutet ist.

In der Figur 2 ist der Start-Referenzpunkt R beispielhaft als die Oberseite 12 des Zentrierrahmens 33 definiert. Die messtechnische Erfassung des Zustellwegs z und der dazugehörigen Zustellkraft F erfolgt ab dem Zeitpunkt, zu dem der Batteriemodul-Boden 10 (Figur 2) bei der Zustellbewegung die Zentrierrahmen-Oberseite 12 passiert.

Vor dem Start der obigen Zustellbewegung wird ein Höhenversatz zwischen der Zentrierrahmen-Oberseite 12 und der Schraubdom-Oberseite 14 als ein Offset-Wert messtechnisch erfasst. Der Offset-Wert ist identisch mit dem maximal zurücklegbaren Zustellweg z zwischen dem Start-Referenzpunkt R und der Montageposition A.

In der Figur 4 ist ein Soll-Kraft-/Wegverlauf F(z)ₛₒₗₗ mit durchgezogener Linie in einem Kraft-Weg-Diagramm gezeigt, wie es beispielhaft in der Auswerteeinheit 43 hinterlegt ist. Demnach bleibt bei der Zustellbewegung die Soll-Zustellkraft Fₛₒₗₗ bis kurz vor Erreichen der Montageposition A gering. Erst bei Kontaktaufnahme des Batteriemodul-Bodens 10 mit der noch nicht verteilten Wärmeleitpaste 25 (Figur 2) steigt die auf das Batteriemodul 3 zu beaufschlagende Soll-Zustellkraft Fₛₒₗₗ an, und zwar bis zum Erreichen der Montageposition A, bei der die Soll-Zustellkraft Fₛₒₗₗ bei einem Wert F_{A} liegt.

In der Fig. 4 ist zudem mit gestrichelter Linie ein Ist-Kraft-/Wegverlauf F(z)ᵢₛₜ dargestellt, bei dem die Zustellkraft Fᵢₛₜ bereits wesentlich früher als erwartet ansteigt. Dies kann auf eine im Batteriegehäuse 1 fehlerhaft vorhandene Störkontur, etwa eine Fügekomponente oder dergleichen, hindeuten. Mittels des Vergleichs des Soll-Kraft-/Wegverlauf F(z)ₛₒₗₗ mit dem Ist-Kraft-/Wegverlauf F(z)ᵢₛₜ kann die Auswerteeinheit 43 ermitteln, ob der Zustell-Prozessschritt fehlerfrei erfolgt oder nicht. Bei Nichtvorliegen eines fehlerfreien Zustell-Prozessschrittes kann das Batteriegehäuse 1 mitsamt Batteriemodul 3 einer Nachbearbeitungs-Station zugeführt werden, in der eine manuelle Nachbearbeitung der Traktionsbatterie durch einen Werker erfolgen kann.

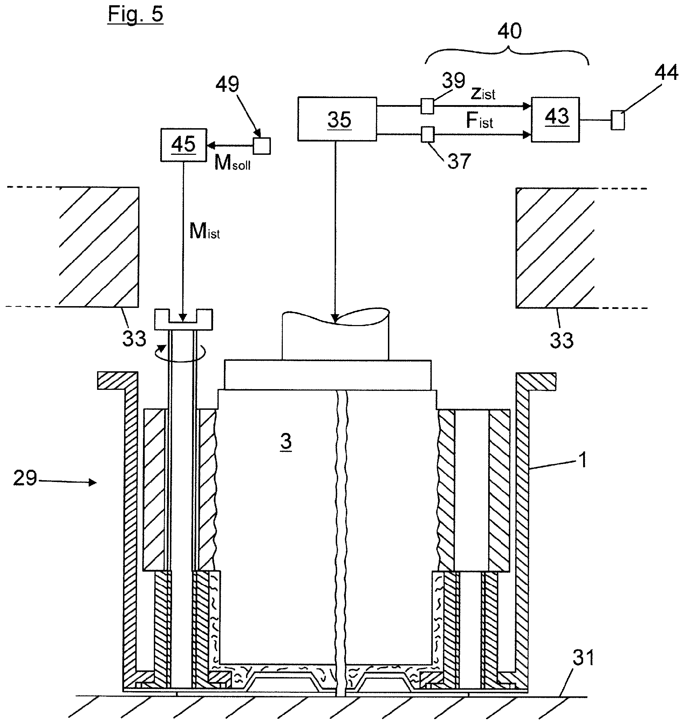

Bei Vorliegen eines einwandfreien Zustell-Prozessschrittes folgt ein Befestigungs-Prozessschritt (Fig. 5), bei dem mittels einer Schraubeinheit 45 der Schraubbolzen 19 durch den Montageschaft 47 des Batteriemoduls 3 geführt wird und mit dem bodenseitigen Schraubdom 21 verschraubt wird. Der Schraubeinheit 45 ist eine zweite Überwachungseinrichtung 49 zugeordnet, die während des Schraubvorgangs ein Ist-Anzugmoment Mᵢₛₜ erfasst und mit einem Soll-Anzugmoment Mₛₒₗₗ vergleicht. Sofern das Ist-Anzugmoment Mᵢₛₜ das in der zweiten Überwachungseinrichtung 49 hinterlegte Soll-Anzugmoment Mₛₒₗₗ erreicht, wird der Schraubvorgang beendet.

## Patentansprüche

1. Verfahren zum Fügen zumindest eines Batteriemoduls (3) in ein Batteriegehäuse (1) einer Traktionsbatterie eines Fahrzeugs, bei dem in einem Zustell-Prozessschritt das Batteriemodul (3) robotergesteuert über einen Zustellweg (z) und mittels einer Zustellkraft (F) in das Batteriegehäuse (1) eingefahren wird, und zwar bis Erreichen einer Montageposition (A), in der das Batteriemodul (3) lagerichtig sowie mittelbar oder unmittelbar auf einer Anlagekontur (17) eines Gehäusebodens (7) des Batteriegehäuses (1) aufliegt, und in einem Befestigungs-Prozessschritt das lagerichtig positionierte Batteriemodul (3) in dem Batteriegehäuse (1) befestigt wird, wobei im Befestigungs-Prozessschritt ein Schraubvorgang erfolgt, bei dem das Batteriemodul (3) mittels zumindest eines Schraubbolzens (19) an einem Anschraubpunkt (21) des Batteriegehäuses (1) verschraubt wird, **dadurch gekennzeichnet, dass** der Zustell-Prozessschritt mittels einer Überwachungseinrichtung (40) überwacht wird, die während des Zustell-Prozessschritts einen Ist-Zustellweg (zᵢₛₜ) und eine Ist-Zustellkraft (Fᵢₛₜ) erfasst und auf dieser Grundlage auswertet, ob der Zustell-Prozessschritt fehlerfrei erfolgt oder nicht, dass der Befestigungs-Prozessschritt mittels einer zweiten Überwachungseinrichtung (49) überwacht wird, die auswertet, ob der Befestigungs-Prozessschritt fehlerfrei erfolgt oder nicht, und dass die zweite Überwachungseinrichtung (49) beim Schraubvorgang ein auf den Schraubbolzen (19) wirkendes Ist-Anzugmoment (Mᵢₛₜ) erfasst, und bei Erreichen eines Soll-Anzugmoments (Mₛₒₗₗ) den Schraubvorgang beendet.

2. Verfahren nach Anspruch 1, **dadurch gekennzeichnet, dass** die Überwachungseinrichtung (40) eine Auswerteeinheit (43) aufweist, die die Ist-Zustellkraft (Fᵢₛₜ) und den Ist-Zustellweg (zᵢₛₜ) mit damit korrespondierenden Sollwerten vergleicht, und dass die Auswerteeinheit (43) auf der Grundlage dieses Vergleichs ermittelt, ob ein fehlerfreier Zustell-Prozessschritt vorliegt.

3. Verfahren nach Anspruch 1 oder 2, **dadurch gekennzeichnet, dass** die Überwachungseinrichtung (40) einen Ist-Kraft-/Wegverlauf (F(z)ᵢₛₜ) der Ist-Zustellkraft (Fᵢₛₜ) über den Ist-Zustellweg (zᵢₛₜ) erfasst, und dass die Überwachungseinrichtung (40) den Ist-Kraft-/Wegverlauf (F(z)ᵢₛₜ) mit einem in der Überwachungseinrichtung (40) hinterlegten Soll-Kraft-/Wegverlauf (F(z)ₛₒₗₗ) vergleicht.

4. Verfahren nach einem der vorhergehenden Ansprüche, **dadurch gekennzeichnet, dass** prozesstechnisch vor dem Zustell-Prozessschritt ein Applikations-Prozessschritt erfolgt, bei dem eine Wärmeleitpaste (25) auf den Gehäuseboden (7) bzw. die Anlagekontur (17) des Batteriegehäuses (1) aufgebracht wird, und dass die Wärmeleitpaste (25) im Zusammenbauzustand der Traktionsbatterie wärmeisolierende Luftspalte (23) zwischen dem Batteriegehäuseboden (7) und dem Batteriemodul (3) ausfüllt.

5. Roboteranlage zur Durchführung eines Verfahrens nach einem der vorhergehenden Ansprüche, mit einer Fügestation (29), die eine Zustelleinrichtung (35) aufweist, mittels der das Batteriemodul (3) über einen Zustellweg (z) und mittels einer Zustellkraft (F) in das Batteriegehäuse (1) einfahrbar ist, und zwar bis Erreichen der Montageposition (A), und die Zustelleinrichtung (35) ein Kraftmesssystem (37) aufweist, mittels dem eine Ist-Zustellkraft (Fᵢₛₜ) während des Zustellvorgangs erfassbar ist, und die Zustelleinrichtung (35) ein Wegmesssystem (39) aufweist, mittels dem ein Ist-Zustellweg (zᵢₛₜ) während des Zustellvorgangs erfassbar ist, **dadurch gekennzeichnet, dass** die Zustelleinrichtung (35) eine Überwachungseinheit (40) aufweist, die auf der Grundlage des erfassten Ist-Zustellwegs (zᵢₛₜ) und der erfassten Ist-Zustellkraft (Fᵢₛₜ) auswertet, ob der Zustell-Prozessschritt fehlerfrei erfolgt oder nicht.

## Claims

1. Method for fitting at least one battery module (3) into a battery housing (1) of a traction battery of a vehicle, in which, in a delivery process step, the battery module (3) is introduced into the battery housing (1) in a robot-controlled manner via a delivery path (z) and by means of a delivery force (F), specifically until an assembled position (A) is reached in which the battery module (3) rests in the correct position and directly or indirectly on a contact contour (17) of a housing base (7) of the battery housing (1), and in a securing process step, the correctly positioned battery module (3) is secured in the battery housing (1), wherein in the securing process step a screwing operation takes place in which the battery module (3) is screwed to a screw-on point (21) of the battery housing (1) by means of at least one screw bolt (19), **characterised in that** the delivery process step is monitored by a monitoring unit (40) which detects an actual delivery path (z_{act}) and an actual delivery force (F_{act}) during the delivery process step, and evaluates on this basis whether or not the delivery process step is carried without error, **in that** the securing process step is monitored by a second monitoring unit (49) which evaluates whether or not the securing process step is carried out without error, and **in that** the second monitoring unit (49) detects an actual tightening torque (M_{act}) acting on the screw bolt (19) during the screwing operation and terminates the screwing operation when a set tightening torque (Mₛₑₜ) is reached.

2. Method according to claim 1, **characterised in that** the monitoring apparatus (40) has an evaluation unit (43) which compares the actual delivery force (F_{act}) and the actual delivery path (z_{act}) with setpoint values corresponding thereto, and **in that** the evaluation unit (43) determines on the basis of this comparison whether the delivery process step is without error.

3. Method according to claim 1 or 2, **characterised in that** the monitoring apparatus (40) detects an actual force/path profile (F(z)_{act}) of the actual delivery force (F_{act}) over the actual delivery path (z_{act}), and **in that** the monitoring apparatus (40) compares the actual force/path profile (F(z)_{act}) with a setpoint force/path profile (F(z)ₛₑₜ) stored in the monitoring apparatus (40).

4. Method according to any of the preceding claims, **characterised in that,** in terms of process, before the delivery process step an application process step is carried out in which a heat-conducting paste (25) is applied to the housing base (7) and the contact contour (17) of the battery housing (1), and **in that** the heat-conducting paste (25) fills heat-insulating air gaps (23) between the battery housing base (7) and the battery module (3) when the traction battery is in the assembled state.

5. Robot system for performing a method according to any of the preceding claims, having a fitting station (29) which has a delivery apparatus (35) by means of which the battery module (3) can be inserted into the battery housing (1) via a delivery path (z) and by means of a delivery force (F), specifically until the assembled position (A) is reached, and the delivery apparatus (35) has a force measurement system (37) by means of which an actual delivery force (F_{act}) can be detected during the delivery operation, and the delivery apparatus (35) has a path measurement system (39) by means of which an actual delivery path (z_{act}) can be detected during the delivery operation, **characterised in that** the delivery apparatus (35) has a monitoring unit (40) which evaluates, on the basis of the detected actual delivery path (z_{act}) and the detected actual delivery force (F_{act}), whether or not the delivery process step is carried out without error.

## Revendications

1. Procédé pour assembler au moins un module de batterie (3) dans un boîtier de batterie (1) d'une batterie de propulsion d'un véhicule, dans lequel, dans une étape de processus d'alimentation, le module de batterie (3) est inséré dans le boîtier de batterie (1) sous la commande d'un robot sur un trajet d'alimentation (z) et au moyen d'une force d'alimentation (F), et ce, jusqu'à atteindre une position de montage (A), dans lequel le module de batterie (3) repose en bonne position ainsi que directement ou indirectement sur un contour de contact (17) d'un fond de boîtier (7) du boîtier de batterie (1), et dans une étape de processus de fixation, le module de batterie (3) positionné en bonne position est fixé dans le boîtier de batterie (1), dans lequel un procédé de vissage a lieu dans l'étape de processus de fixation, dans lequel le module de batterie (3) est vissé au moyen d'au moins un boulon fileté (19) sur un point de vissage (21) du boîtier de batterie (1), **caractérisé en ce que** l'étape de processus de fixation est surveillée au moyen d'un dispositif de surveillance (40), qui détecte un trajet d'alimentation réel (zᵢₛₜ) et une force d'alimentation réelle (Fᵢₛₜ) pendant l'étape de processus d'alimentation et évalue sur cette base si l'étape de processus d'alimentation se déroule sans erreur ou non, **en ce que** l'étape de processus de fixation est surveillée au moyen d'un deuxième dispositif de surveillance (49), qui évalue si l'étape de processus de fixation se déroule sans erreur ou non, et **en ce que** le deuxième dispositif de surveillance (49) détecte un couple de serrage réel (Mᵢₛₜ) agissant sur le boulon fileté (19) pendant le procédé de vissage, et termine le procédé de vissage lorsqu'un couple de serrage de consigne (Mₛₒₗₗ) est atteint.

2. Procédé selon la revendication 1, **caractérisé en ce que** le dispositif de surveillance (40) présente une unité d'évaluation (43), qui compare la force d'alimentation réelle (Fᵢₛₜ) et le trajet d'alimentation réel (zᵢₛₜ) avec des valeurs de consigne correspondantes, et **en ce que** l'unité d'évaluation (43) détermine, sur la base de cette comparaison, si une étape de processus d'alimentation sans erreur est présente.

3. Procédé selon la revendication 1 ou 2, **caractérisé en ce que** le dispositif de surveillance (40) détecte une courbe force/trajet réelle (F(z)ᵢₛₜ) de la force d'alimentation réelle (Fᵢₛₜ) sur le trajet d'alimentation réel (zᵢₛₜ), et **en ce que** le dispositif de surveillance (40) compare la courbe force/trajet réelle (F(z)ᵢₛₜ) à une courbe force/trajet de consigne (F(z)ₛₒₗₗ) enregistrée dans le dispositif de surveillance (40).

4. Procédé selon l'une quelconque des revendications précédentes, **caractérisé en ce qu'**avant l'étape de processus d'alimentation, une étape de processus d'application est effectuée, dans laquelle une pâte thermoconductrice (25) est appliquée sur le fond de boîtier (7) ou sur le contour de contact (17) du boîtier de batterie (1), et **en ce que** la pâte thermoconductrice (25) remplit, à l'état monté de la batterie de propulsion, des interstices (23) thermiquement isolants entre le fond de boîtier de batterie (7) et le module de batterie (3).

5. Installation robotisée pour la mise en œuvre d'un procédé selon l'une quelconque des revendications précédentes, avec une station d'assemblage (29), qui présente un dispositif d'alimentation (35), au moyen duquel le module de batterie (3) peut être introduit dans le boîtier de batterie (1) sur un trajet d'alimentation (z) et au moyen d'une force d'alimentation (F), et notamment jusqu'à ce que la position de montage (A) soit atteinte, et le dispositif d'alimentation (35) présente un système de mesure de force (37), au moyen duquel une force d'alimentation réelle (Fᵢₛₜ) est détectable pendant le procédé d'alimentation, et le dispositif d'alimentation (35) présente un système de mesure de trajet (39), au moyen duquel un trajet d'alimentation réel (zᵢₛₜ) est détectable pendant le procédé d'alimentation, **caractérisé en ce que** le dispositif d'alimentation (35) présente une unité de surveillance (40) qui évalue, sur la base du trajet d'alimentation réel détecté (zᵢₛₜ) et de la force d'alimentation réelle détectée (Fᵢₛₜ), si l'étape de processus d'alimentation se déroule sans erreur.
